# EUROPEAN PATENT SPECIFICATION

(11) **EP 4 326 048 B1**
(45) Date of publication and mention of the grant of the patent: **29.10.2025**
(21) Application number: 22714639.6
(22) Date of filing: 29.03.2022
(51) Int. Cl.: A01G 3/025, A01G 3/037

(54) **LOPPER**
ASTSCHERE
ÉLAGUEUR

(30) Priority: 20.04.2021 SE 2150488
(43) Date of publication of application: 28.02.2024
(73) Proprietor: Husqvarna AB, 561 82 Huskvarna (SE)
(72) Inventor: RUDOLF, Peter, 89250 Senden (DE)
(74) Representative: Finkele, Rolf
(86) International application number: PCT/SE2022/050310
(87) International publication number: WO 2022/225433

(56) References cited:
- CN-A- 108 184 470
- CN-A- 111 567 251
- DE-U1- 9 401 672
- KR-B1- 101 306 959

## Description

### TECHNICAL FIELD

The invention relates to a lopper for cutting branches.

### BACKGROUND

A lopper is a gardening tool comprising a pair of shears configured for cutting twigs and/or branches of trees and/or shrubberies. A manual lopper has a long handle or long handles in comparison with pruning shears and secateurs. A lopper thus, has longer reach and may provide a larger cutting force than a pair of pruning shears or secateurs.

Electrically powered loppers are known in the art. In such a lopper, an electric motor drives the pair of shears. For instance, a leadscrew may be utilised for moving one of the shears in relation to the other shear. The leadscrew translates the rotation of the electric motor into a linear motion. A gearbox may reduce the rotational speed of the electric motor and increase the torque applied to the leadscrew.

The lopper known from KR 101 306 959 B1 exhibits a pivotable joint at its cutting head that allows for the cutting portion to be arranged at different angles in respect to its pole portion. For instance, JP 2001-340023, WO 2018/205126, DE 9401672 U1, CN 111 567 251 A and CN 108 184 470 A, disclose loppers having an electric motor and a leadscrew arranged in or at a handle of the relevant lopper. The linear motion is transmitted through a tube from the handle end to the pair of shears at an opposite end of the lopper. Some of these loppers even haven removable shaft sections that can be inserted into the loppers drive shaft to extend the same.

EP 3000313 and US 5826341 disclose loppers having an electric motor and a mechanism for actuation of the shears arranged at a cutting shears end of a tube, opposite to handle ends.

### SUMMARY

In a lopper having the electric motor and the leadscrew arranged at a handle portion of the lopper, the tube extending to the shears has to be dimensioned to withstand the high linear force transferred through the tube in order to prevent e.g., buckling. Moreover, if the tube is telescopic, securing telescopic parts in relation to each other in an extended position requires special measures to withstand the high linear force. A sturdy and accordingly, heavy tube is required in such a lopper making handling thereof cumbersome especially if the tube is long.

A lopper having the entire shears driving mechanism including the electric motor arranged at the shears in a cutting portion of the lopper is heavy at the shears, which makes it difficult to control the lopper with precision. Moreover, the lopper will have a bulky cutting portion which makes it difficult to reach certain twigs or branches e.g., in a dense foliage.

It would be advantageous to achieve an electrically powered lopper overcoming, or at least alleviating, at least some of the above-mentioned drawbacks. In particular, it would be desirable to provide an electrically powered lopper which is easy to handle and can be moved precisely in relation to twigs and/or branches to be cut. To better address one or more of these concerns, a lopper having the features defined in the independent claim is provided.

The invention is achieved with the appended claims.

According to an aspect of the invention, there is provided a lopper for cutting branches comprising a handle portion, a cutting portion comprising a pair of shears, a tube portion interconnecting the handle portion with the cutting portion, and an electrically powered drive arrangement for actuation of at least one of the shears. The drive arrangement comprises an electric motor, a gearbox, and a mechanism for translating rotating motion into linear motion, the electric motor and gearbox being arranged in or at the handle portion and the mechanism for translating rotating motion into linear motion being arranged in or at the cutting portion. The drive arrangement further comprises a rotatable drive shaft extending through the tube portion and being connected to the gearbox and to the mechanism for translating rotating motion into linear motion.

Since the electric motor and gearbox are arranged in or at the handle portion and the mechanism for translating rotating motion into linear motion is arranged in or at the cutting portion, the weight of the drive arrangement is divided between the handle portion and the cutting portion of the lopper. Two of the components of the drive arrangement are provided in or at the handle portion and only one component in or at the cutting portion. Thus, the weight of the drive arrangement is distributed towards the handle portion. Moreover, since the drive arrangement comprises the rotatable drive shaft extending through the tube portion, the tube portion is mainly subjected to torsional load, which can be supported by a more slender and lighter tube portion than one which has to support compressive and buckling loads. Thus, the cutting portion is light and slender, and the tube portion is light, which promotes easy handling and precise control of the lopper and its cutting portion.

The lopper may be a domestically or commercially utilised gardening tool. It may be configured for cutting twigs and/or branches of trees and/or shrubberies.

The electrically powered drive arrangement may be powered by a battery arranged in the lopper or carried by a user of the lopper e.g., in a backpack or in a belt around the waist of the user. Alternatively, the electrically powered drive arrangement may be powered by mains power via a power cord.

The handle portion is configured for grasping and handling the lopper by a user. The tube portion is provided for extending the reach of a user of the lopper, in order to cut twigs and/or branches at a distance from the user e.g., in the foliage of a tree or within a dense shrubbery.

The drive shaft may be journaled in the tube portion.

Herein, the mechanism for translating rotating motion into linear motion may alternatively be referred to as the mechanism. The mechanism may be directly or indirectly connected to at least one of the shears. The mechanism for translating rotating motion into linear motion may for instance comprise a leadscrew or a ball screw connected to one of the shears. Thus, the one shear may be moved in relation to the other shear to produce a cutting relative motion between the shears.

The gearbox may reduce the rotational speed of the electric motor and increase the torque applied to the mechanism for translating rotating motion into linear motion.

According to embodiments, the tube portion may have a length ≥ 1 m, such as a length within a range of 1 - 5 m or 1 - 6 m. In this manner, the lopper may be configured for extending the reach of a user for cutting twigs and/or branches at a distance from the user e.g., in the foliage of a tree or within a shrubbery.

Moreover, since the above-mentioned problem of buckling in prior art loppers having the electric motor and the leadscrew arranged at a handle portion of the relevant lopper increases with the length of the lopper, the present lopper with the rotatable drive shaft extending through the tube portion and being connected to the gearbox at the handle portion and to the mechanism at the cutting portion is especially advantageous to create long loppers. That is, the present lopper may be particularly advantageous wherein the tube portion is within an upper portion of the above-mentioned range, such as 2,5 - 5 m or 2,5 - 6 m.

According to embodiments, the tube portion may comprise an extensible tube section, and the rotatable drive shaft may comprise an extensible shaft section arranged in the extensible tube section. In this manner, the lopper may be configured for extending its reach. The versatility of the lopper thus, may be increased as a user may reach twigs and/or branches at a farther distance from the user.

Moreover, as mentioned above, since the electric motor and gearbox are arranged in or at the handle portion and the mechanism is arranged in or at the cutting portion, and since the drive arrangement comprises the rotatable drive shaft extending through the tube portion, the tube portion is mainly subjected to torsional load. In an extensible tube section such torsional load may be easily supported in comparison with prior art loppers configured to transfer compressive loads via the tube portion. Thus, a lightweight extensible tube section may be provided.

According to embodiments, the tube portion may comprise a separate insertable and removable tube section. According to the invention, the drive shaft comprises an insertable and removable shaft section arranged in the insertable and removable tube section. In this manner, the tube portion may be disassembled, either as such or from one or more of the cutting portion and the handle portion.

Moreover, as mentioned above, since the electric motor and gearbox are arranged in or at the handle portion and the mechanism is arranged in or at the cutting portion, and since the drive arrangement comprises the rotatable drive shaft extending through the tube portion, the tube portion is mainly subjected to torsional load. In a separate insertable and removable tube section such torsional load may be easily supported in comparison with prior art loppers configured to transfer compressive loads via the tube portion. Thus, a lightweight separate insertable and removable tube section may be provided.

The insertable and removable shaft section may be insertable and removeable as one unit by being arranged in the insertable and removable tube section. Accordingly, the insertable and removable shaft section as such need not be removable from the insertable and removable tube section.

According to embodiments, the rotatable drive shaft may have a non-round cross section, such as a square, a hexagonal, or an oval cross section. In this manner, engagement between the drive shaft and the gearbox, between the drive shaft and the mechanism for translating rotating motion into linear motion, and/or between sections of the drive shaft may be promoted. Namely, the risk of the drive shaft spinning freely where it engages with the gearbox and/or the mechanism for translating rotating motion into linear motion or where sections of the drive shaft engage with each other, is reduced in comparison with a drive shaft having a round cross section.

According to embodiments, the lopper may comprise a pivotable joint for positioning the cutting portion at at least two different angles in relation to the tube portion. In this manner, reaching twigs and/or branches in the foliage of a tree or within a dense shrubbery with the cutting portion may be improved.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Figs. 1a - 1g illustrates a lopper according to embodiments,
Fig. 2 schematically illustrates a drive arrangement of a lopper,
Figs. 3a and 3b illustrate a cross section through part of an extensible tube section,
Fig. 4 illustrates a cross section through parts of a separate insertable and removable tube section, and
Fig. 5 illustrates a cross section through part of a cutting portion of a lopper.

### DETAILED DESCRIPTION

Aspects and/or embodiments of the invention will now be described more fully. Like numbers refer to like elements throughout. Well-known functions or constructions will not necessarily be described in detail for brevity and/or clarity.

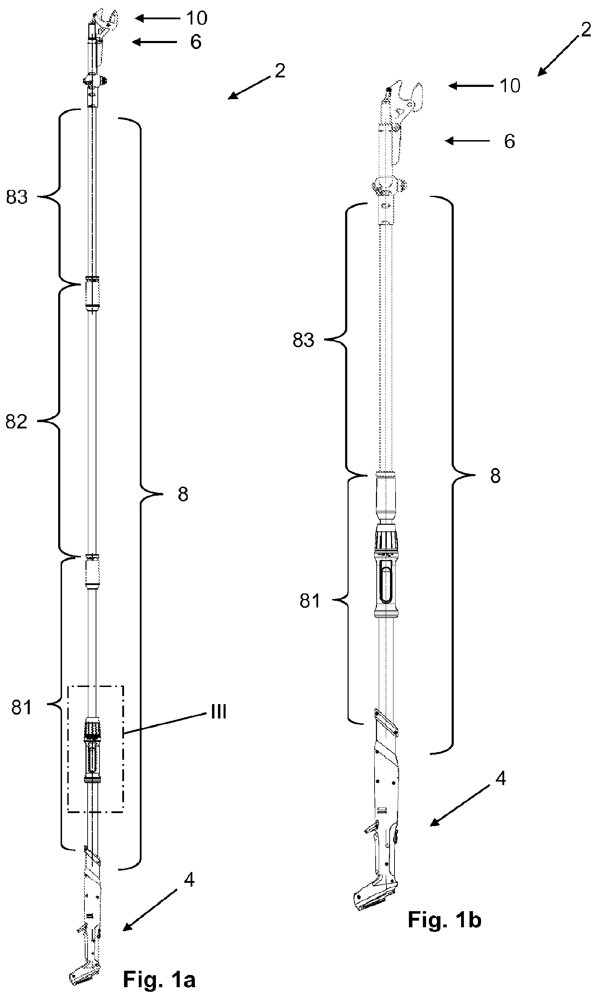

**Figs. 1a - 1g** illustrates a lopper 2 according to embodiments. The lopper 2 is configured for cutting twigs and/or branches.

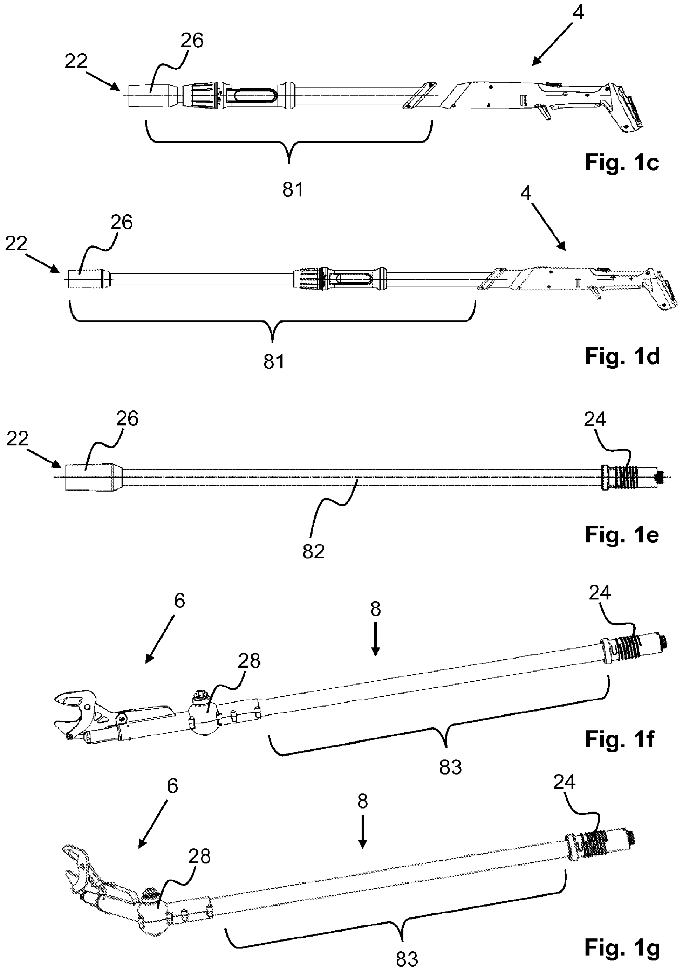

In **Fig. 1a** the lopper 2 is shown in a fully extended state. In **Fig. 1b** the lopper 2 is shown in a compact shortened state and in **Figs. 1c** - **1g** different parts of the lopper 2 are shown. The lopper 2 may have one or more extended states in between the fully extended and the shortened state, as will be discussed below.

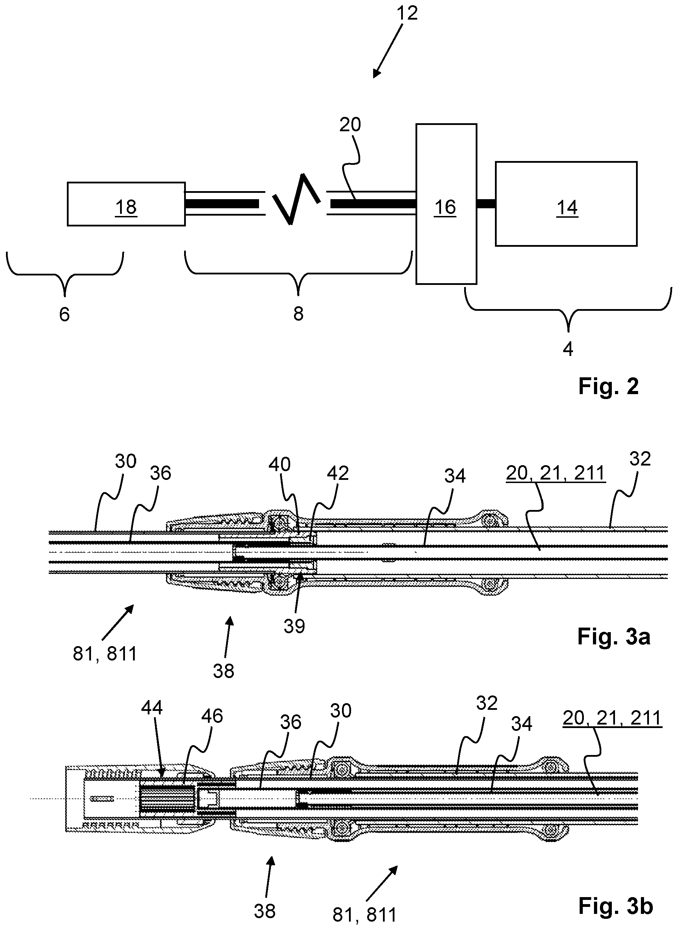

The lopper 2 comprises a handle portion 4, a cutting portion 6 and a tube portion 8. The tube portion 8 connects the handle portion 4 with the cutting portion 6. The cutting portion 6 comprises a pair of shears 10. The lopper 2 further comprises a drive arrangement, see further below with reference to **Fig. 2****.** The drive arrangement is configured to actuate one or both shears of the pair of shears 10. The drive arrangement is electrically powered e.g., by a battery or by mains power.

The handle portion 4 and optionally, the tube portion 8, may be grasped by a user in order to handle the lopper 2. The tube portion 8 enables the user of the lopper 2 to cut with the pair of shears 10 in locations out of arms reach of the user. The handle portion 4 comprises control means to be operated by a user of the lopper 2. Such a control means is at least configured for initiating a cut with the pair of shears 10.

For this purpose, the tube portion 8 may have a length ≥ 1 m, such as a length within a range of 1 - 4 m, or within a range of 1 - 5 m, or within a range 1 - 6 m. The length is a length of the tube portion 8 when it is fully extended, telescopically and/or with one or more separate tube sections, see below.

According to some embodiments, the tube portion 8 may form at least 50% of a total length of the lopper 2. In this manner, the tube portion 8 may substantially extend the length of the lopper 2 and accordingly, also the reach of a user of the lopper 2. The length is a length of the tube portion 8 when it is fully extended, telescopically and/or with one or more separate tube sections, see below.

The tube portion 8 comprises one or more tube sections 81, 82, 83 such as, an extensible tube section 81, a separate insertable and removable tube section 82, and a tube section 83 carrying the cutting portion 6. In **Fig. 1a****,** the lopper 2 is shown with three tubes sections; the extensible tube section 81 which is connected to the handle portion 4, the separate insertable and removable tube section 82, and the tube section 83 carrying the cutting portion 6. In **Figs. 1a** **and** **1d****,** the extensible tube section 81 is shown in its extended state. In **Fig. 1b****,** the lopper 2 is shown with two tube sections; the extensible tube section 81 and the tube section 83 carrying the cutting portion 6. In **Figs. 1b** **and** **1c****,** the extensible tube portion 81 is shown in its shortened state.

Accordingly, the lopper 2 may be taken apart into three separate parts, each part comprising one of the tube sections 81, 82, 83. As understood from **Figs. 1a and 1b****,** the lopper 2 may be assembled with or without the insertable and removable tube section 82.

The different tube sections 81, 82, 83 are connected to each other via inner and outer threads 22, 24 arranged at end portions of the tubes sections 81, 82, 83. The inner threads 22 may be provided in sockets 26. Alternative elements may be provided for connecting the difference tube sections 81, 82, 83 such as, bayonet couplings and splined connections.

According to some embodiments, such as the illustrated embodiments, the lopper 2 may comprise a pivotable joint 28 for positioning the cutting portion 6 at at least two different angles in relation to the tube portion 8. Thus, the versatility of the lopper a 2 is increased since reaching twigs and/or branches with the cutting portion 6 may be improved. Specifically, in **Figs 1f and 1g** the two different angles of the cutting portion 6 in relation to the tube portion 8 are clearly shown. The cutting portion 6 further may be positioned at intermediate angles between the two shown angular positions.

**Fig. 2** schematically illustrates a drive arrangement 12 of a lopper. The lopper may be a lopper 2 as discussed above with reference to **Figs. 1a** - **1g****.**

The drive arrangement 12 comprises an electric motor 14, a gearbox 16, and a mechanism 18 for translating rotating motion into linear motion. The gearbox 16 may for instance comprise a planetary gear. The mechanism 18 for translating rotating motion into linear motion may comprise e.g., a leadscrew or a ball screw.

The electric motor 14 and the gearbox 16 are arranged in or at the handle portion 4 of the lopper and the mechanism 18 for translating rotating motion into linear motion is arranged in or at the cutting portion 6. In **Fig. 2** example positions of the handle portion 4 and the cutting portion 6 are schematically indicated with respective curly brackets.

The drive arrangement 12 comprises a rotatable drive shaft 20 extending through the tube portion 8. The drive shaft 20 is connected to the gearbox 16 at one end of the drive shaft 20 and to the mechanism 18 at an opposite end of the drive shaft 20. As indicated by the interrupted drive shaft 20 in **Fig. 2****,** the tube portion 8 and the drive shaft 20 may be set and/or assembled at different lengths as also discussed in connection with **Figs. 1a** - **1g** above and **Figs. 3a and 3b** below.

As mentioned above, the tube portion 8 may comprise one or more tube sections. Accordingly, the rotatable drive shaft 20 may comprises one or more shaft sections arranged in the one or more tube sections.

The rotatable drive shaft 20 may have a non-round cross section, such as square, hexagonal, or oval. Transfer of torque between two shaft sections thus, may be ensured. Also, transfer of torque between the drive shaft 20 and the gearbox 16 and between the drive shaft 20 and the mechanism 18 thus, may be ensured.

The rotatable drive shaft 20 may be journaled in the tube portion 8. In this manner, the drive shaft 20 may be slender and accordingly low weight. Supporting the drive shaft 20 in this manner may reduce negative effects of imbalances of the drive shaft 20. Also, in this manner, the drive shaft 20 may be dimensioned to transfer a specific maximum torque. It does not have to dimensioned to provide a stiffness which withstands imbalances of the drive shaft 20 during nominal rotational speeds.

Such journaling may be provided by one or more ball bearings, roller bearings, or plain bearings. See further below with reference to **Figs. 3a - 4****.**

Since the rotatable drive shaft 20 may have a non-round cross section, bushings may be provided around the drive shaft 20 for journaling thereof.

Mentioned purely as an example, the pair of shears 10 and the drive arrangement 12 may be configured for cutting branches having a diameter of up to 32 mm. For this purpose, the electric motor may have a power rating of 300 W at 18.000 rpm, the gearbox 16 may have a reduction within a range of 10:1 - 80:1, such as 40:1, and a lead screw of the mechanism 18 may have a diameter within a range of 8 - 12 mm, a pitch within a range of 4 - 8 mm and 4 entrances. A torque transferred via the drive shaft may be within a range of 5 - 15 Nm.

According to some embodiments, during use of the lopper 2, the rotatable drive shaft 20 may be rotated at a rotational speed within a range of 200 - 800 rpm during transfer of a torque from the gearbox 16 to the mechanism 18 for translating rotating motion into linear motion. In this manner, the drive shaft 20 may be rotated at a moderate rotational speed which facilitates countering imbalances of the drive shaft 20 in the tube portion 8. For instance, it may be sufficient to journal the drive shaft 20 in fewer positions along its length than if the drive shaft were rotated at higher rotational speeds. Also, the bearings utilised for journaling the drive shaft 20 may be of a simple kind, such as plain bearings made from a plastic material.

**Figs. 3a and 3b** illustrate a cross section through part of an extensible tube section 81 of the lopper shown in **Figs. 1a - 1g****.** **Figs. 3a and 3b** show a cross section of the portion indicated with III in **Fig. 1a****.** Accordingly, reference is also made to **Fig. 1a****.**

As mentioned above, the tube portion 8 comprise an extensible tube section 81. Further, the rotatable drive shaft 20 comprises an extensible shaft section 21 arranged in the extensible tube section 81.

According to the illustrated embodiments, the extensible tube section 81 may comprise a telescopic tube section 811, and the extensible shaft section 21 may comprise a telescopic shaft section 211. In this manner, the extensible tube section 81 and the extensible shaft section 21 may be devised in a compact and user-friendly manner to extend the reach of the lopper.

**Fig. 3a** shows a portion of the telescopic tube section 811 in an extended state. An inner, first tube member 30 has been drawn outwardly from an outer, second tube member 32 to a fully extended position of the first tube member 32. Accordingly, also an inner, first shaft member 34 has been drawn outwardly from an outer, second shaft member 36. **Fig. 3b** shows the telescopic tube section 811 in a shortened state. The first tube member 30 has been fully pushed into the second tube member 32. Also, the first shaft member 34 has been pushed into the second shaft member 36.

According to alternative embodiments, the first tube member may form an outer tube member and the second tube member may form an inner tube member. Similarly, the first shaft member may form an outer shaft member and the second shaft member may form an inner shaft member.

For instance, a clamping member 38 may be provided for securing the first and second tube members 30, 32 to each other. The clamping member 34 may be released in order to reposition the first and second tube members 30, 32 in relation to each other. The first and second tube members 30, 32 may be positioned in relation to each other, and clamped to each other, in intermediate positions between the extended state and the shortened state. Thus, the telescopic tube section 811 may be adjusted to different lengths.

The rotatable drive shaft 20 may be journaled in the telescopic tube section 811. In this manner, the drive shaft 20 may be rotatably supported in the telescopic tube section 811. Accordingly, secure rotation of the drive shaft 20 in the tube portion 8 may be provided.

In the illustrated embodiments, the drive shaft 20 is journalled at both end portions of the first tube member 30.

A first journaling of the drive shaft 20 is provided by a first bearing 39. The first bearing 39 comprises an outer bushing 40 arranged in, and secured to, the first tube member 30 and an inner bushing 42 rotatably supported in the first bushing 40 and arranged slidably around the drive shaft 20. Thus, the first bearing 39 follows the relevant end portion of the first tube member 30 as it is positioned within the second tube member 32, and i.e., within the telescopic tube section 811.

A further journaling of the drive shaft 20 is provided by a second bearing 44 arranged at an opposite end portion of the first tube member 30. An outer bushing of the second bearing 44 is formed by the inner first tube member 30. An inner bushing 46 of the second bearing 44 is secured to the drive shaft 20. The inner bushing 46 is rotatably supported by the inner tube member 30.

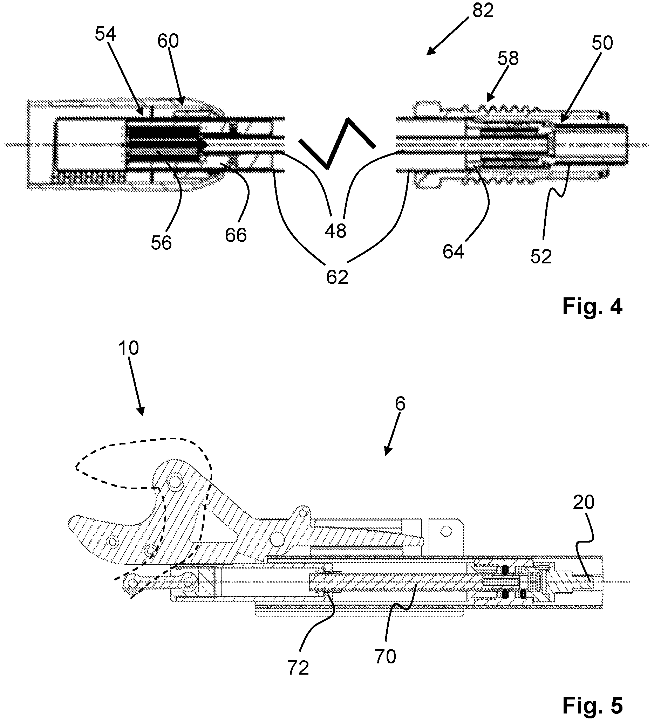

**Fig. 4** illustrates a cross section through parts of the separate insertable and removable tube section 82 shown in **Fig. 1e** of the lopper shown in **Figs. 1a** - **1g** and comprising a drive arrangement 12 as discussed in connection with **Fig. 2****.** Accordingly, reference is also made to **Figs. 1a** - **2****.**

As mentioned above, the tube portion 8 comprises a separate insertable and removable tube section 82. Further, the drive shaft 20 may comprise an insertable and removable shaft section 48 arranged in the insertable and removable tube section 82.

In order for the drive shaft 20 to transfer a torque via the insertable and removable shaft section 48, there are provided splined connections between sections of the drive shaft.

Accordingly, the insertable and removable shaft section 48 comprises a first end portion 50 provided with splines 52 configured to mate with a splined end portion of a drive shaft portion connect to the gearbox 16 and a second end portion 54 provided with splines 56 configured to engage with a splined end portion of a drive shaft portion connected to the mechanism 18 for translating rotating motion into linear motion.

In the shown embodiments, the first end portion 50 is provided with external splines 52 and the second end portion 54 is provided with internal splines 56 arranged in a socket.

The insertable and removable shaft section 48 is journaled at the first end portion 50 provided with splines 52 and at the second end portion 54 provided with splines 56. In this manner, the insertable and removable shaft section 48 is rotatably supported in the insertable and removable tube section 82.

In the illustrated embodiments, the insertable and removable shaft section 48 is journaled by bearings 58, 60, wherein outer bushings are formed by a tube member 62 of the insertable and removable tube section 82 and inner bushings 64, 66 secured to the insertable and removable shaft section 48. The inner bushings 64, 66 may be formed by the respective first and second end portions 50, 54 provided with splines 52, 56.

Each of the first end portion 50 provided with splines 52 and the second end portion 54 provided with splines 56 may be made from a plastic material, such as polyamide. In this manner, the end portions 50, 54 provided with splines 52, 56 may be efficiently produced e.g., by injection moulding. If the end portions 50, 54 provided with splines 52, 56 form inner bushings of the bearings 58, 60, a plastic material, such a polyamide forms a durable material withstanding wear caused by rotation in the tube member 62.

A connection between a drive shaft section of the cutting portion 6 and the insertable and removable shaft section 48 or the extensible shaft section of the extensible tube section 81 may be provided with a splined connection in the same manner as discussed above with reference to **Fig. 4****.**

**Fig. 5** illustrates a cross section through part of a cutting portion 6 of a lopper, such as the lopper 2 discussed above with reference to **Figs. 1a** - **4****.**

The mechanism 18 for translating rotating motion into linear motion comprises a threaded shaft 70 connected to the rotatable drive shaft 20 and a thread engaging portion 72 engaging with the threaded shaft 70. The thread engaging portion 72 is connected to the at least one of the shears 10 for the actuation thereof. In this manner, a leadscrew or ball screw may be provided for performing a cutting motion with the shears 10.

In **Fig. 5****,** the moveable shear which is connected to the threaded engaging portion 72 is indicated with broken lines for the sake of clarity.

According to alternative embodiments, the thread engaging portion 72 may be connected with the drive shaft 20 and the threaded shaft 70 may be connected to the at least one of the shears 10 for the actuation thereof.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A lopper (2) for cutting branches comprising
a handle portion (4),
a cutting portion (6) comprising a pair of shears (10),
a tube portion (8) interconnecting the handle portion (4) with the cutting portion (6), and an electrically powered drive arrangement (12) for actuation of at least one of the shears (10),
wherein the drive arrangement (12) comprises
an electric motor (14), a gearbox (16), and a mechanism (18) for translating rotating motion into linear motion,
the electric motor (14) and gearbox (16) being arranged in or at the handle portion (4) and the mechanism (18) for translating rotating motion into linear motion being arranged in or at the cutting portion (6),
wherein the drive arrangement (12) further comprises
a rotatable drive shaft (20) extending through the tube portion (8) and being connected to the gearbox (16) and to the mechanism (18) for translating rotating motion into linear motion
wherein the tube portion (8) comprises a separate insertable and removable tube section (82),
and wherein the drive shaft (20) comprises
an insertable and removable shaft section (48) arranged in the insertable and removable tube section (82),
**characterized in that**,
the insertable and removable shaft section (48) comprises
a first end portion (50) provided with splines (52) configured to mate with a splined end portion of a drive shaft (20) portion connect to the gearbox (16) and a second end portion (54) provided with splines (56) configured to engage with a splined end portion of a drive shaft (20) portion connected to the mechanism (18) for translating rotating motion into linear motion.

2. The lopper (2) according to claim 1, wherein the rotatable drive shaft (20) is journaled in the tube portion (8).

3. The lopper (2) according to claims 1 and 2, wherein the rotatable drive shaft (20) is journaled at the first end portion (50) provided with splines (52) and at the second end portion (54) provided with splines (56).

4. The lopper (2) according to claim 1 or 3, wherein, wherein each of the first end portion (50) provided with splines (52) and the second end portion (54) provided with splines (56) is made from a plastic material, such a polyamide.

5. The lopper (2) according to claim 1, wherein the tube portion (8) has a length equal or greater than 1 m, such as a length within a range of 1-5 m or within a range of 1-6 m.

6. The lopper (2) according to claim 1 or 5, wherein the tube portion (8) forms at least 50% of a total length of the lopper (2).

7. The lopper (2) according to claim 5 or 6, wherein the rotatable drive shaft (20) is journaled in the tube portion (8).

8. The lopper (2) according to any one of the preceding claims, wherein the tube portion (8) comprises an extensible tube section (81), and wherein the rotatable drive shaft (20) comprises an extensible shaft section (21) arranged in the extensible tube section (81).

9. The lopper (2) according to claim 8, wherein the extensible tube section (81) comprises a telescopic tube section (811), and wherein the extensible shaft section (21) comprises a telescopic shaft section (211).

10. The lopper (2) according to claim 2 and 9, wherein the rotatable drive shaft (20) is journaled in the telescopic tube section (211).

11. The lopper (2) according to any one of the preceding claims, wherein, wherein the rotatable drive shaft (20) has a non-round cross section, such as a square, a hexagonal, or an oval cross section.

12. The lopper (2) according to any one of the preceding claims, wherein the rotatable drive shaft (20) is rotated at a rotational speed within a range of 200 - 800 rpm during transfer of a torque from the gearbox (16) to the mechanism (18) for translating rotating motion into linear motion.

13. The lopper (2) according to any one of the preceding claims, wherein the mechanism (18) for translating rotating motion into linear motion comprises a threaded shaft (70) connected to the rotatable drive shaft (20) and a thread engaging portion (72) engaging with the threaded shaft (70), and wherein the thread engaging portion (72) is connected to the at least one of the shears (10) for said actuation thereof.

14. The lopper (2) according to any one of the preceding claims, comprising a pivotable joint (28) for positioning the cutting portion (6) at least two different angles in relation to the tube portion (8).

## Patentansprüche

1. Astschere (2) zum Schneiden von Ästen, umfassend:
einen Griffabschnitt (4),
einen Schneideabschnitt (6), der eine Schere (10) umfasst,
einen Rohrabschnitt (8), der den Griffabschnitt (4) mit dem Schneideabschnitt (6) verbindet, und eine elektrisch betriebene Antriebsanordnung (12) zur Betätigung mindestens eines der Scherenblätter (10),
wobei die Antriebsanordnung (12) umfasst:
einen Elektromotor (14), ein Getriebe (16) und einen Mechanismus (18) zum Umwandeln einer Drehbewegung in eine Linearbewegung,
wobei der Elektromotor (14) und das Getriebe (16) im oder am Griffabschnitt (4) angeordnet sind und der Mechanismus (18) zum Umwandeln von Drehbewegung in eine Linearbewegung im oder am Schneideabschnitt (6) angeordnet ist,
wobei die Antriebsanordnung (12) ferner umfasst:
eine drehbare Antriebswelle (20), die sich durch den Rohrabschnitt (8) erstreckt und mit dem Getriebe (16) und dem Mechanismus (18) zum Umwandeln von Drehbewegung in eine Linearbewegung verbunden ist,
wobei der Rohrabschnitt (8) einen separaten einführbaren und entfernbaren Rohrabschnitt (82) umfasst
und wobei die Antriebswelle (20) umfasst:
einen im einführbaren und entfernbaren Rohrabschnitt (82) angeordneten einführbaren und entfernbaren Wellenabschnitt (48),
**dadurch gekennzeichnet, dass**
der einführbare und entfernbare Wellenabschnitt (48) umfasst:
einen ersten Endabschnitt (50), der mit Keilen (52) versehen und konfiguriert ist, um mit einem verkeilten Endabschnitt eines mit dem Getriebe (16) verbundenen Abschnitts der Antriebswelle (20) zusammenzupassen, und einen zweiten Endabschnitt (54), der mit Keilen (56) versehen und konfiguriert ist, um mit einem verkeilten Endabschnitt eines mit dem Mechanismus (18) zum Umwandeln von Drehbewegung in eine Linearbewegung verbundenen Abschnitts der Antriebswelle (20) einzugreifen.

2. Astschere (2) nach Anspruch 1, wobei die drehbare Antriebswelle (20) im Rohrabschnitt (8) gelagert ist.

3. Astschere (2) nach den Ansprüchen 1 und 2, wobei die drehbare Antriebswelle (20) an dem mit Keilen (52) versehenen ersten Endabschnitt (50) und an dem mit Keilen (56) versehenen zweiten Endabschnitt (54) gelagert ist.

4. Astschere (2) nach Anspruch 1 oder 3, wobei, wobei der mit Keilen (52) versehene erste Endabschnitt (50) und der mit Keilen (56) versehene zweite Endabschnitt (54) jeweils aus einem Kunststoffmaterial wie Polyamid hergestellt sind.

5. Astschere (2) nach Anspruch 1, wobei der Rohrabschnitt (8) eine Länge gleich oder größer als 1 m aufweist, wie eine Länge in einem Bereich von 1 bis 5 m oder in einem Bereich von 1 bis 6 m.

6. Astschere (2) nach Anspruch 1 oder 5, wobei der Rohrabschnitt (8) mindestens 50 % einer Gesamtlänge der Astschere (2) bildet.

7. Astschere (2) nach Anspruch 5 oder 6, wobei die drehbare Antriebswelle (20) im Rohrabschnitt (8) gelagert ist.

8. Astschere (2) nach einem der vorstehenden Ansprüche, wobei der Rohrabschnitt (8) einen ausziehbaren Rohrabschnitt (81) umfasst und wobei die drehbare Antriebswelle (20) einen ausziehbaren Wellenabschnitt (21) umfasst, der in dem ausziehbaren Rohrabschnitt (81) angeordnet ist.

9. Astschere (2) nach Anspruch 8, wobei der ausziehbare Rohrabschnitt (81) einen Teleskoprohrabschnitt (811) umfasst und wobei der ausziehbare Wellenabschnitt (21) einen Teleskopschaftabschnitt (211) umfasst.

10. Astschere (2) nach Anspruch 2 und 9, wobei die drehbare Antriebswelle (20) im Teleskoprohrabschnitt (211) gelagert ist.

11. Astschere (2) nach einem der vorstehenden Ansprüche, wobei, wobei die drehbare Antriebswelle (20) einen nicht runden Querschnitt aufweist, wie einen quadratischen, einen sechseckigen oder einen ovalen Querschnitt.

12. Astschere (2) nach einem der vorstehenden Ansprüche, wobei die drehbare Antriebswelle (20) während der Übertragung eines Drehmoments vom Getriebe (16) auf den Mechanismus (18) zum Umwandeln von Drehbewegung in eine Linearbewegung mit einer Drehzahl im Bereich von 200 bis 800 U/min gedreht wird.

13. Astschere (2) nach einem der vorstehenden Ansprüche, wobei der Mechanismus (18) zum Umwandeln von Drehbewegung in eine Linearbewegung eine mit der drehbaren Antriebswelle (20) verbundene Gewindewelle (70) und einen Gewindeeingriffsabschnitt (72) umfasst, der mit der Gewindewelle (70) in Eingriff steht, und wobei der Gewindeeingriffsabschnitt (72) mit mindestens einem der Scherenblätter (10) zu dessen Betätigung verbunden ist.

14. Astschere (2) nach einem der vorstehenden Ansprüche, umfassend ein Schwenkgelenk (28) zum Positionieren des Schneideabschnitts (6) in mindestens zwei unterschiedlichen Winkeln in Bezug auf den Rohrabschnitt (8).

## Revendications

1. Coupe-branches (2) permettant de couper des branches comprenant
une partie poignée (4),
une partie coupante (6) comprenant une paire de cisailles (10),
une partie tube (8) reliant la partie poignée (4) à la partie coupante (6), et un dispositif d'entraînement électrique (12) pour actionner au moins l'une parmi les cisailles (10),
dans lequel le dispositif d'entraînement (12) comprend
un moteur électrique (14), une boîte de vitesses (16) et un mécanisme (18) pour convertir un mouvement de rotation en un mouvement linéaire,
le moteur électrique (14) et la boîte de vitesses (16) étant agencés dans ou au niveau de la partie poignée (4) et le mécanisme (18) pour convertir un mouvement de rotation en un mouvement linéaire étant agencé dans ou au niveau de la partie coupante (6),
dans lequel le dispositif d'entraînement (12) comprend en outre
un arbre d'entraînement rotatif (20) s'étendant à travers la partie tube (8) et étant relié à la boîte de vitesses (16) et au mécanisme (18) pour convertir un mouvement de rotation en un mouvement linéaire
dans lequel la partie tube (8) comprend une section tube séparée, insérable et amovible (82),
et dans lequel l'arbre d'entraînement (20) comprend
une section arbre insérable et amovible (48) agencée dans la section tube insérable et amovible (82),
**caractérisé en ce que,**
la section arbre insérable et amovible (48) comprend
une première partie extrémité (50) pourvue de cannelures (52) conçue pour s'accoupler avec une partie extrémité cannelée d'une partie arbre d'entraînement (20) reliée à la boîte de vitesses (16) et une seconde partie extrémité (54) pourvue de cannelures (56) conçue pour s'accoupler avec une partie extrémité cannelée d'une partie arbre d'entraînement (20) reliée au mécanisme (18) pour convertir un mouvement de rotation en un mouvement linéaire.

2. Coupe-branches (2) selon la revendication 1, dans lequel l'arbre d'entraînement rotatif (20) est tourillonné dans la partie tube (8).

3. Coupe-branches (2) selon les revendications 1 et 2, dans lequel l'arbre d'entraînement rotatif (20) est tourillonné au niveau de la première partie extrémité (50) pourvue de cannelures (52) et au niveau de la seconde partie extrémité (54) pourvue de cannelures (56).

4. Coupe-branches (2) selon la revendication 1 ou 3, dans lequel, dans lequel chacune de la première partie extrémité (50) pourvue de cannelures (52) et de la seconde partie extrémité (54) pourvue de cannelures (56) est fabriquée à partir d'une matière plastique, telle que le polyamide.

5. Coupe-branches (2) selon la revendication 1, dans lequel la partie tube (8) a une longueur égale ou supérieure à 1 m, telle qu'une longueur située dans une plage comprise entre 1 et 5 m ou dans une plage comprise entre 1 et 6 m.

6. Coupe-branches (2) selon la revendication 1 ou 5, dans lequel la partie tube (8) forme au moins 50 % d'une longueur totale du coupe-branches (2).

7. Coupe-branches (2) selon la revendication 5 ou 6, dans lequel l'arbre d'entraînement rotatif (20) est tourillonné dans la partie tube (8).

8. Coupe-branches (2) selon l'une quelconque des revendications précédentes, dans lequel la partie tube (8) comprend une section tube extensible (81), et dans lequel l'arbre d'entraînement rotatif (20) comprend une section arbre extensible (21) agencée dans la section tube extensible (81).

9. Coupe-branches (2) selon la revendication 8, dans lequel la section tube extensible (81) comprend une section tube télescopique (811), et dans lequel la section arbre extensible (21) comprend une section arbre télescopique (211).

10. Coupe-branches (2) selon les revendications 2 et 9, dans lequel l'arbre d'entraînement rotatif (20) est tourillonné dans la section tube télescopique (211).

11. Coupe-branches (2) selon l'une quelconque des revendications précédentes, dans lequel, dans lequel l'arbre d'entraînement rotatif (20) a une section transversale non ronde, telle qu'une section transversale carrée, hexagonale ou ovale.

12. Coupe-branches (2) selon l'une quelconque des revendications précédentes, dans lequel l'arbre d'entraînement rotatif (20) tourne à une vitesse de rotation dans une plage comprise entre 200 et 800 tr/min pendant un transfert d'un couple de la boîte de vitesses (16) au mécanisme (18) pour convertir un mouvement de rotation en un mouvement linéaire.

13. Coupe-branches (2) selon l'une quelconque des revendications précédentes, dans lequel le mécanisme (18) pour convertir un mouvement de rotation en un mouvement linéaire comprend un arbre fileté (70) relié à l'arbre d'entraînement rotatif (20) et une partie de mise en prise filetée (72) mise en prise avec l'arbre fileté (70), et dans lequel la partie de mise en prise filetée (72) est reliée à l'au moins une parmi les cisailles (10) pour ledit actionnement associé.

14. Coupe-branches (2) selon l'une quelconque des revendications précédentes, comprenant une articulation pivotante (28) pour positionner la partie coupante (6) à au moins deux angles différents par rapport à la partie tube (8).
